# EUROPEAN PATENT APPLICATION

(11) **EP 1 995 700 A2**
(43) Date of publication of application: **26.11.2008**
(21) Application number: 07021662.7
(22) Date of filing: 07.11.2007
(51) Int. Cl.: G08B 13/14

(54) **Burglarproof device and method for electronic device**

(30) Priority: 21.05.2007 CN 200710104169
(71) Applicant: ACER INCORPORATED, Taipei Hsien 221 (TW)
(72) Inventor: Su, Dong-Hsing, Hsichih Taipei Hsien Taiwan (TW)
(74) Representative: UEXKÜLL & STOLBERG

(57) **Abstract**

A burglarproof device and method are presented for preventing an electronic device from being used by an unauthorized user. The burglarproof device includes an anti-theft module and an authentication device. The anti-theft module and the authentication device can communicate with each other by wireless communication, in which the anti-theft module is mounted internally within the electronic device and the authentication device is mounted externally to the electronic device. The anti-theft module can send an authentication activation signal to the authentication device upon the activation of a power switch of the electronic device. The authentication device can be actuated upon the reception of the authentication activation signal and send an encoded signal generated by encoding an authentication code retained in the authentication device to the anti-theft module. The anti-theft module can decode the encoded signal and check whether the decoded signal is a legitimate authentication code. If the decoded signal is an authentication code, the microcontroller of the anti-theft module actuates the operation of the electronic device.

## Description

### FIELD OF THE INVENTION

The present invention is related to a burglarproof device and method, and more particularly to a burglarproof mechanism for preventing an electronic device from being used by an unauthorized user.

### BACKGROUND OF THE INVENTION

With the miniaturization of electronic element, the portability of electronic device today has been greatly enhanced. Therefore, most of the electronic devices allow a user to carry it about in order to facilitate the convenience of use. Nowadays, the portable electronic device is quite susceptible to the greedy eyes of thieves due to its great portability. It is especially true for precious electronic device. When a precious electronic device is stolen or lost, monetary loss or other additional property loss will be incurred. If a burglarproof device can be offered to remind the owner of the electronic device or disable the electronic device from being used by an unauthorized user after the electronic device is stolen or lost, an intimidating effect can be attained. In this manner, everyone can not use the electronic device except the owner of the electronic device, thereby improving user's confidence on the electronic device and enhancing the reliability of the electronic device.

There is a tendency to provide a burglarproof device and method for electronic device to reduce the probability of being stolen and to prevent the risk of being used by an unauthorized user.

### SUMMARY OF THE INVENTION

An object of the present invention is to provide a burglarproof device for an electronic device for protecting the electronic device from thievery by reducing the probability of being stolen.

Another object of the present invention is to provide a burglarproof method for an electronic device, in which the method includes an authentication process that is performed by means of wireless communication when the power switch of the electronic device is turned on, thereby actuating the electronic device after the authentication process is completed.

According to a preferred embodiment of the present invention, a burglarproof device for an electronic device is provided. The burglarproof device includes an anti-theft module including a microcontroller and a wireless signal transceiver for sending an authentication activating signal when a power switch of the electronic device is turned on, and an authentication device including a control unit and an authentication code, in which the control unit is initiated in response to the receipt of the authentication activating signal to produce an encoded signal by encoding the authentication code. The encoded signal is transmitted to the anti-theft module and decoded by the wireless signal transceiver, and the decoded signal is verified by the microcontroller to determine whether it is a correct authentication code. If the decoded signal is a correct authentication code, the microcontroller actuates the electronic device. Besides, the authentication device includes an enclosure which is made up of a fragile material, in which the enclosure is securely fastened with the substrate of the authentication device or encloses the electronic circuits of the authentication device. The enclosure is attached to a stationary plane nearby the electronic device. The stationary plane can be, for example, the surface of a ceiling or a wall.

Another aspect of the preferred embodiment of the present invention is associated with a burglarproof method for preventing the electronic device from being used by an unauthorized user. The method is carried out by the following steps. First, an anti-theft module and an authentication device are provided, in which the authentication device includes an authentication code possessed by an authorized user. Next, when the power switch of the electronic device is turned on, the anti-theft module sends an authentication activating signal to the authentication device. Next, the authentication device encodes the authentication code into an encoded signal in response to the receipt of the authentication activating signal and transmits the encoded signal to the anti-theft module. Next, the anti-theft module decodes the received encoded signal and verifies the decoded signal to determine whether the decoded signal is a correct authentication code. Next, if the decoded signal is a correct authentication code, the anti-theft module actuates the electronic device.

Now the foregoing and other features and advantages of the present invention will be best understood through the following descriptions with reference to the accompanying drawings, wherein:

### BRIEF DESCRIPTION OF THE DRAWINGS

Fig. 1 is a block diagram showing the burglarproof device according to a preferred embodiment of the present invention;

Fig. 2(A) is a cross-sectional view showing the topology of a first configuration of the authentication device;

Fig. 2(B) is a cross-sectional view showing the topology of a second configuration of the authentication device;

Fig. 3(A) to Fig. 3(C) are flowcharts illustrating the burglarproof method according to the present invention; and

Fig. 4 is a block diagram showing the authentication device according to another embodiment of the present invention.

### DETAILED DESCRIPTION OF THE PREFERRED EMBODIMENT

Several preferred embodiments embodying the features and advantages of the present invention will be expounded in following paragraphs of descriptions. It is to be realized that the present invention is allowed to have various modification in different respects, all of which are without departing from the scope of the present invention, and the description herein and the drawings are to be taken as illustrative in nature, but not to be taken as limitative.

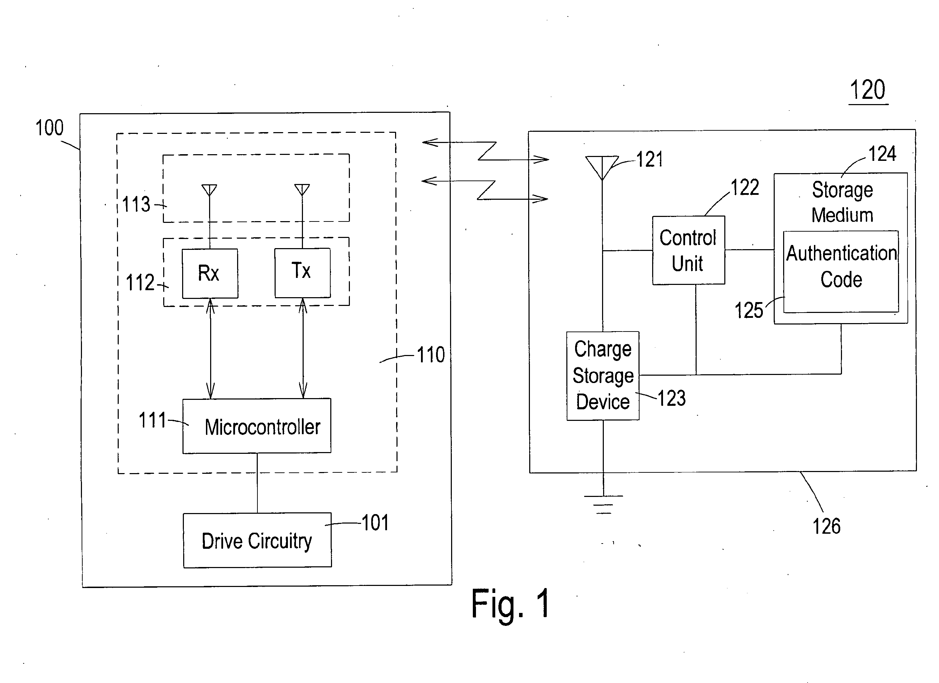

The present invention proposes a burglarproof device for use with an electronic device. The burglarproof device includes an anti-theft module and an authentication device, in which the anti-theft module is mounted inside the electronic device and the authentication device is mounted outside the electronic device and capable of communicating with the anti-theft module by a wireless signal. As shown in Fig. 1, an electronic device 100, for example a notebook computer or an image projector, includes a drive circuitry 101 for performing the operation of the electronic device. The electronic device 100 further includes an anti-theft module 110 having a microcontroller 111, a wireless signal transceiver 112 and an antenna device 113. The microcontroller 111 is configured to send a command to the wireless signal transceiver 112 when the power switch of the electronic device 100 (not shown) is turned on, so that the wireless signal transceiver 112 can transmit an authentication activating signal through the antenna device 113.

Besides, an authentication device 120 is mounted outside the electronic device 100 and capable of communicating with the anti-theft module 110 by a wireless signal, for example, a radio signal. Alternatively, the authentication device 120 can communicate with the anti-theft module 110 by an infrared signal or an ultrasonic signal, and thus the antenna device 121 within the authentication device 120 and the antenna device 113 within the anti-theft module 110 are implemented by infrared transceivers or ultrasonic transceivers. The authentication device 120 functions as an anti-theft key for the electronic device 100 and includes an antenna device 121, a control unit 122, a charge storage device 123, a storage medium 124 and an enclosure 126. The antenna device 121 is configured to receive the authentication activating signal from the antenna device 113 of the anti-theft module 110. The charge storage device 123 is configured to collect electric charges on the antenna device 121 to store electric energy or provide sufficient power for the electronic circuits of the authentication device 120. In normal operation, the control unit 122 of the authentication device 120 stays in a standby mode without consumption of electric energy. When the antenna device 121 receives a wireless signal, the control unit 122 can be powered by the power provided by the charge storage device 123. The enclosure 126 is configured to protect the electronic circuits of the authentication device 120 (not shown).

In addition, the storage medium 124 is preferably implemented by a flash memory. The storage medium 124 is configured to store a predetermined authentication code 125. The control unit 122 is connected to the storage medium 124 and capable of performing an encoding process to the authentication code 125 stored in the storage medium 124 by an analog signal modulation method upon the receipt of the authentication activating signal. In normal operation, the control unit 122 will not initiate the encoding process without the reception of the authentication activating signal. The feasible analog signal modulation method carried out by the control unit 122 can be, but not limited to, amplitude shift keying (ASK), frequency shift keying (FSK), or phase shift keying (PSK). Through the analog signal modulation processing by the control unit 122, the authentication code 125 can be converted into an analog signal.

Furthermore, it should be noted that the authentication device 120 can be attached to a plane, such as the surface of a wall or table, and the enclosure 126 of the authentication device 120 is made up of a fragile material. Therefore, if a thief desires to steal or dismantle the authentication device 120, the enclosure 126 will be broken with the external force applied thereto. This would lead to the malfunction of the authentication device 120. In this manner, even the thief steals the electronic device 100 and the authentication device 120, the electronic device 100 can not be actuated successfully because of the failure to proceed with authentication process. It is to be noted that the authentication code 125 is unique to the electronic device 100. Certainly, the number of the authentication device 126 can be two or more and can be portable, so that an authorized user can be allowed to proceed with authentication process and actuate the electronic device 100 with a certified portable authentication device 120 after the electronic device 100 is displaced.

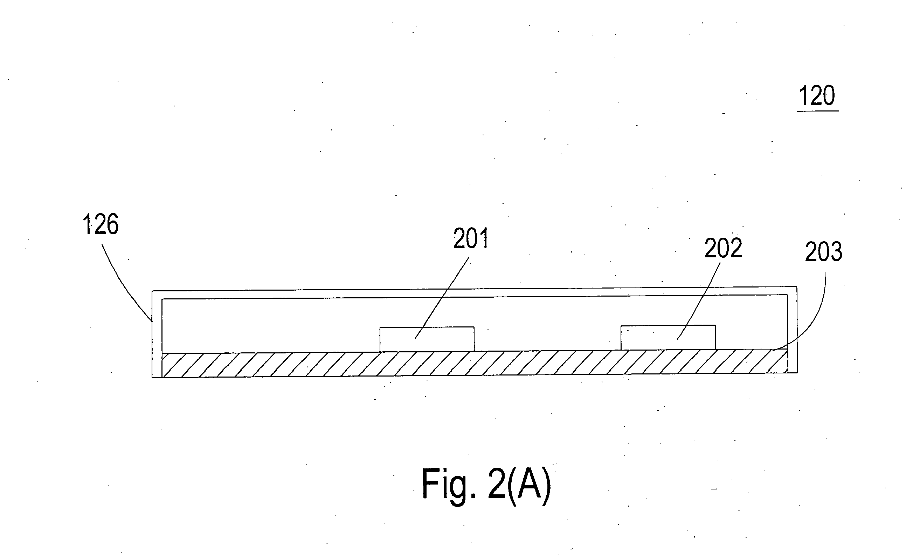

The authentication device 120 may have a variety of configurations. Fig. 2(A) is a cross-sectional view showing the topology of a first configuration of the authentication device 120, in which the enclosure 126 of the authentication device 120 is securely fastened with a substrate 203, and the electronic circuits 201 and 202 (such as the electronic circuits constituting the antenna device, the control unit, the charge couple device and the storage medium) are mounted on the top surface of the substrate 203. If a thief desires to steal or dismantle the authentication device 120, the enclosure 126 which is made up of a fragile material and/or the substrate 203 will be impaired due to an external force applied thereto. This would lead to the malfunction of the electronic circuits 201 and 202, and the authentication device 120 will be disabled accordingly.

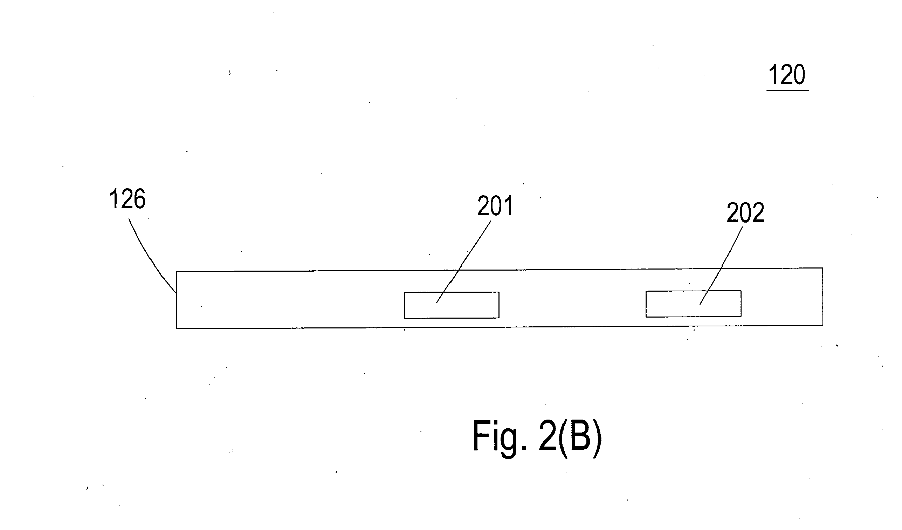

Fig. 2(B) is a cross-sectional view showing the topology of a second configuration of the authentication device 120, in which the electronic circuits 201 and 202 are encapsulated in the enclosure 126. If a thief desires to steal or dismantle the authentication device 120, the enclosure 126 which is made up of a fragile material will be impaired due to an external force applied thereto. Thus, the electronic circuits 201 and 202 will be malfunctioned due to the damage of their carrier, thereby disabling the authentication device 120.

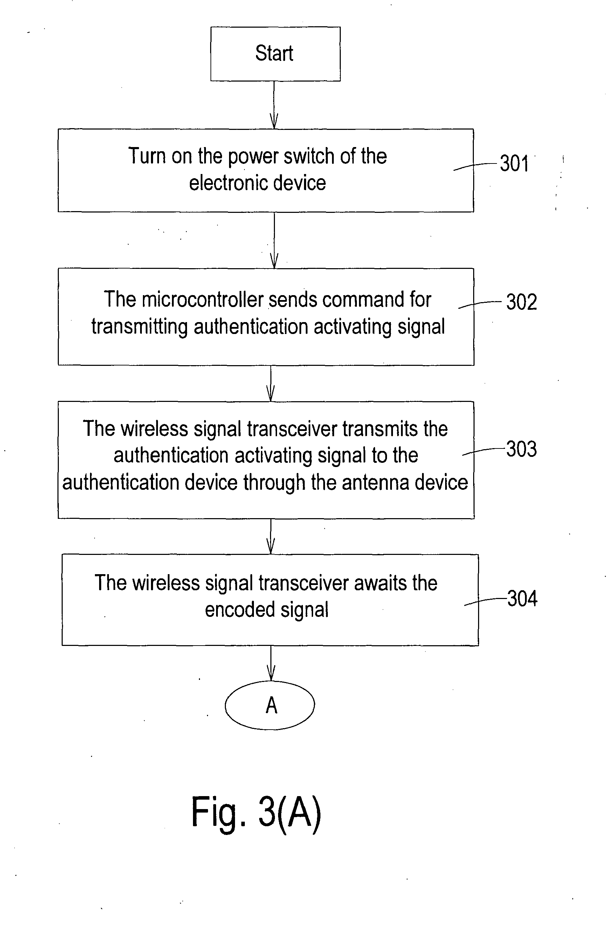

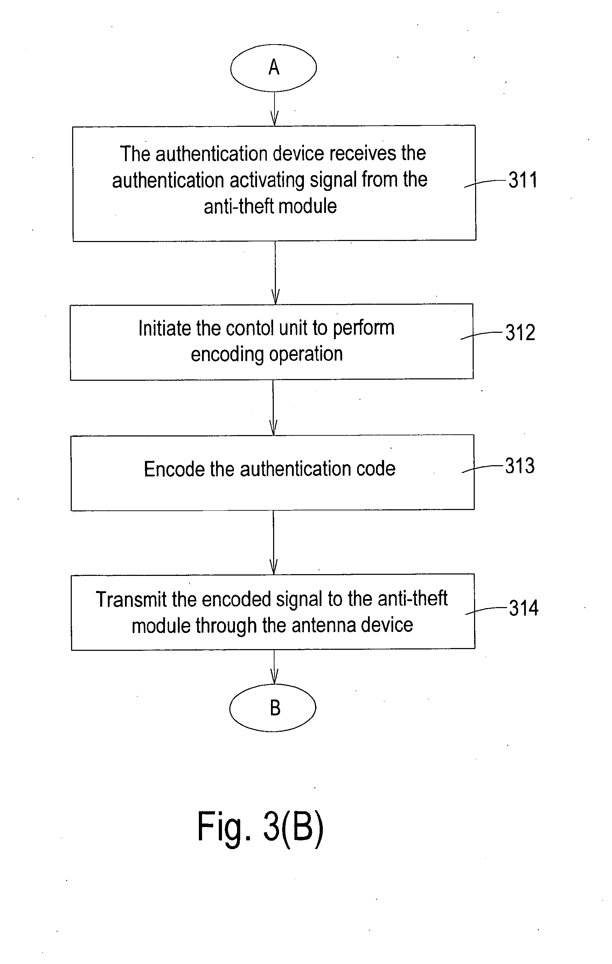

Fig. 3(A) to Fig. 3(C) are flowcharts illustrating the burglarproof method according to the present invention. Referring to Fig. 3(A), in the beginning the power switch of the electronic device 100 is turned on at step 301. Next, at step 302 the microcontroller 111 of the anti-theft module 110 sends a command to the wireless signal transceiver 112 to transmit an authentication activating signal. Next, at step 303 the wireless signal transceiver 112 transmits the authentication activating signal to the nearby authentication device 120 through the antenna device 113. Next, at step 304 the wireless signal transceiver 112 will await the encoded signal transmitted from the authentication device 120. The execution of the burglarproof method will jump to the subroutine A of Fig. 3(B).'

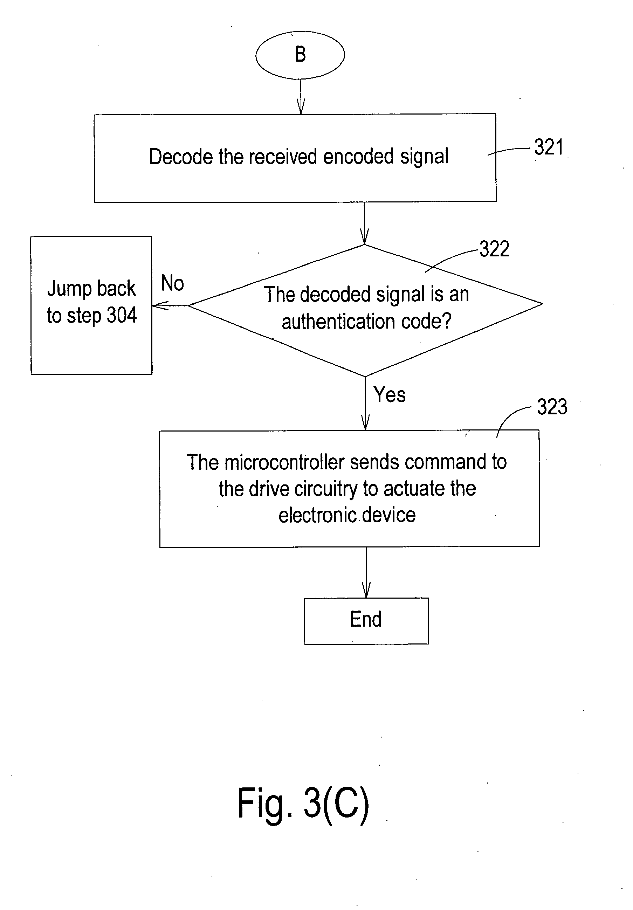

Referring to Fig. 3(B), in the beginning of the subroutine A the authentication device 120 receives the authentication activating signal from the antenna device 113 of the anti-theft module 110, as shown in step 311. Next, at step 312 the control unit 122 initiates the encoding process in response to the receipt of the authentication activating signal by the antenna device 121. Next, at step 313 the control unit 122 encodes the authentication code 125 stored in the storage medium 124 by an analog signal modulation method to convert the authentication code 125 into an encoded signal. Next, at step 314 the encoded signal is transmitted to the anti-theft module 110 through the antenna device 121. The execution of the burglarproof method will jump to the subroutine B of Fig. 3(C).

Referring to Fig. 3(C), in the beginning of the subroutine B the wireless signal transceiver 112 of the anti-theft module 110 performs a decoding process to the received encoded signal by an analog signal demodulation method, as shown in step 321. Next, at step 322 the wireless signal transceiver 112 transmits the decoded signal to the microcontroller 111, and the microcontroller 111 will verify the decoded signal to determine if the decoded signal is a correct authentication code. If the decoded signal is not an authentication code or the wireless signal transceiver 112 does not receive the encoded signal, the execution of the method jumps back to the step 304 of Fig. 3(A). If the decoded signal is an authentication code, the method continues with step 323 by sending a command by the microcontroller 111 to the drive circuitry 101 to initiate the operation of the electronic device 100, thereby actuating the electronic device 100.

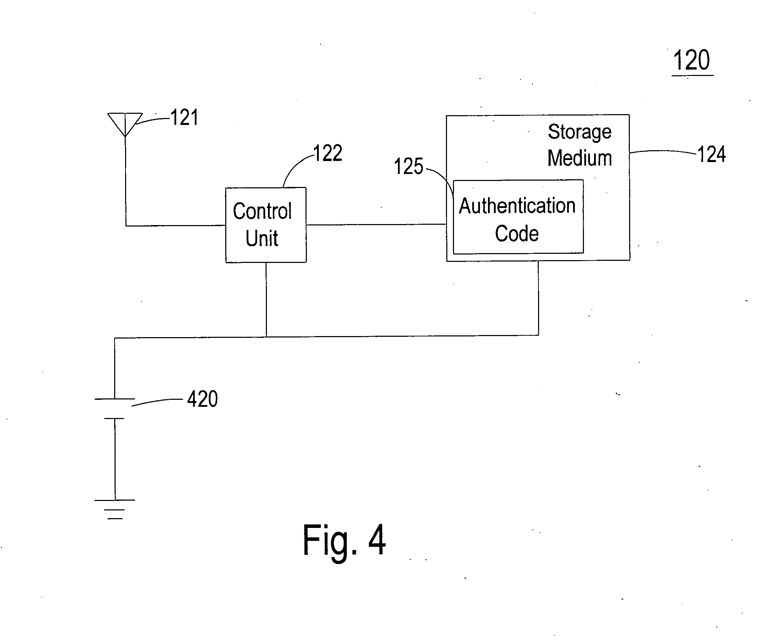

Fig. 4 shows the system architecture of the authentication device 120 according to another embodiment of the present invention. Compared with Fig. 1, it can be understood that the authentication device 120 of Fig. 4 replaces the charge storage device 123 with a battery device 420. Therefore, the battery device 420 can provide the power required for operating the authentication device 120. It should be noted that the antenna device, the control unit and the storage medium of Fig. 4 have the same circuit configuration and operating principle with the counterparts of Fig. 1, and are labeled with the same reference numerals.

In conclusion, the present invention provides a burglarproof device and method for an electronic device, in which the burglarproof device includes an anti-theft module mounted inside the electronic device and an authentication device mounted outside the electronic device. The authentication device is configured to communicate with the anti-theft module with a wireless signal. In the preferred embodiments of the present invention, the anti-theft module includes a microcontroller and a wireless signal transceiver, in which the microcontroller can send a command to the wireless signal transceiver to transmit an authentication activating signal to the authentication device when the power switch of the electronic device is turned on. The authentication device includes an antenna device and a control unit, in which the control unit can be initiated when the antenna device receives the authentication activating signal, so that the authentication code stored in the authentication device can be encoded and the encoded signal can be transmitted to the anti-theft module. The wireless signal transceiver of the anti-theft module can decode the encoded signal and transmit the decoded signal to the microcontroller. The microcontroller can verify the decoded signal to determine if the decoded signal is a correct authentication code. If the decoded signal is a correct authentication code, the microcontroller actuates the electronic device. Accordingly, the burglarproof device can use the wireless communication technique to accomplish the user authentication process and actuate the electronic device according to the results of the user authentication process. Even if the electronic device is stolen, the electronic device can not be actuated without the authentication device. Furthermore, the enclosure of the authentication device is made up of a fragile material. Hence, if the authentication device and the electronic device are both stolen, the encoding capability of the authentication device will be disabled as the authentication device is displaced, so that the authentication device is not available for the actuation of the electronic device.

While the present invention has been described in terms of what are presently considered to be the most practical and preferred embodiments, it is to be understood that the present invention need not be restricted to the disclosed embodiment. On the contrary, it is intended to cover various modifications and similar arrangements included within the spirit and scope of the appended claims which are to be accorded with the broadest interpretation so as to encompass all such modifications and similar structures. Therefore, the above description and illustration should not be taken as limiting the scope of the present invention which is defined by the appended claims.

## Claims

1. A burglarproof device for use with an electronic device, comprising:
an anti-theft module including a microcontroller and a wireless signal transceiver for sending an authentication activating signal when a power switch of the electronic device is turned on; and
an authentication device including a control unit and an authentication code, wherein the control unit is initiated in response to the receipt of the authentication activating signal and encodes the authentication code into an encoded signal;
wherein the encoded signal is transmitted to the anti-theft module through the authentication device and decoded by the wireless signal transceiver, and the microcontroller is configured to determine whether the decoded signal is a correct authentication code and actuates the electronic device when the decoded signal is a correct authentication code.

2. The burglarproof device according to claim 1 wherein the anti-theft module is mounted inside the electronic device and the authentication device is mounted outside the electronic device, and wherein the anti-theft module is configured to communicate with the authentication device by a wireless signal.

3. The burglarproof device according to claim 2 wherein the wireless signal is a radio signal, an infrared signal or an ultrasonic signal.

4. The burglarproof device according to claim 1 wherein the authentication device further includes a storage medium for storing the authentication code.

5. The burglarproof device according to claim 1 wherein the anti-theft module further includes an antenna device for transmitting the authentication activating signal to the authentication device and receiving the encoded signal from the authentication device.

6. The burglarproof device according to claim 1 wherein the authentication device further includes an antenna device for transmitting the encoded signal to the anti-theft module and receiving the authentication activating signal from the anti-theft module.

7. The burglarproof device according to claim 6 wherein the authentication device further includes a charge storage device for collecting electric charges on the antenna device to store electric power therein and powering the authentication device.

8. The burglarproof device according to claim 1 wherein the authentication device further includes a battery device for powering the authentication device.

9. The burglarproof device according to claim 1 wherein the authentication device further includes an enclosure and a substrate, wherein the enclosure is made of a material with fragility and securely fastened with the substrate, so as to be damaged upon the application of an external force to the enclosure or the substrate, thereby disabling the authentication device.

10. A burglarproof device for use with an electronic device, comprising:
an anti-theft module including a microcontroller and a wireless signal transceiver for sending an authentication activating signal when a power switch of the electronic device is turned on; and
an authentication device including a control unit, an enclosure and an authentication code, wherein the enclosure is made up of a material of fragility for being damaged upon the application of an external force to the enclosure, thereby disabling the authentication device, and the control unit is initiated upon the receipt of the authentication activating signal and encodes the authentication code into an encoded signal;
wherein the encoded signal is transmitted from the authentication device to the anti-theft module and decoded by the wireless signal transceiver into a decoded signal, and the microcontroller is configured to determine whether the decoded signal is a correct authentication code and actuates the electronic device when the decoded signal is a correct authentication code.

11. The burglarproof device according to claim 10 wherein the anti-theft module is mounted inside the electronic device and the authentication device is mounted outside the electronic device, and the anti-theft module is configured to communicate with the authentication device by a wireless signal.

12. The burglarproof device according to claim 10 wherein the authentication device further includes a substrate securely fastened with the enclosure, and wherein the enclosure and the substrate are configured to be damaged upon the application of an external force to the enclosure or the substrate, thereby disabling the authentication device.

13. A burglarproof method for preventing an electronic device from being used by an unauthorized user, the method comprising the steps of:
providing an anti-theft module and an authentication device, wherein the authentication device includes an authentication code;
sending an authentication activating signal from the anti-theft module to the authentication device when a power switch of the electronic device is turned on;
encoding the authentication code into an encoded signal by the authentication device in response to the authentication activating signal, and sending the encoded signal to the anti-theft module;
decoding the encoded signal into a decoded signal by the anti-theft module and determining whether the decoded signal is a correct authentication code; and
actuating the electronic device by the anti-theft module, if the decoded signal is a correct authentication code.

14. The burglarproof method according to claim 13 wherein the anti-theft module is mounted inside the electronic device and the authentication device is mounted outside the electronic device, and the anti-theft module is configured to communicate with the authentication device by a wireless signal.

15. The burglarproof method according to claim 14 wherein the wireless signal is a radio signal, an infrared signal or an ultrasonic signal.
